(19) Europäisches Patentamt
European Patent Office
Office européen des brevets

(11) EP 0 516 850 B1

(12) EUROPEAN PATENT SPECIFICATION

(45) Date of publication and mention
of the grant of the patent:
18.09.1996 Bulletin 1996/38

(21) Application number: 91905338.9

(22) Date of filing: 27.02.1991

(51) Int. Cl.$^6$: B01D 53/70

(86) International application number:
PCT/JP91/00258

(87) International publication number:
WO 92/11920 (23.07.1992 Gazette 1992/19)

(54) **METHOD OF REMOVING ORGANIC HALIDES**

VERFAHREN ZUM ENTFERNEN ORGANISCHER HALIDE

PROCEDE D'ELIMINATION D'HALOGENURES ORGANIQUES

(84) Designated Contracting States:
DE FR GB

(30) Priority: 27.12.1990 JP 418884/90

(43) Date of publication of application:
09.12.1992 Bulletin 1992/50

(73) Proprietors:
• JAPAN as represented by DIRECTOR GENERAL,
AGENCY OF INDUSTRIAL SCIENCE AND
TECHNOLOGY
Tokyo 100 (JP)
• TOSOH CORPORATION
Yamaguchi 746 (JP)

(72) Inventors:
• MIZUNO, Koichi
Tsukuba-shi, Ibaraki 305 (JP)
• KOINUMA, Yutaka
Kasiwa-shi, Chiba 277 (JP)
• KOBAYASHI, Satoru
Tsukuba-shi, Ibaraki 305 (JP)
• KUSHIYAMA, Satoshi
Tsuchiura-shi, Ibaraki 300 (JP)
• AIZAWA, Reiji
Ushiku-shi, Ibaraki 300-12 (JP)
• OHUCHI, Hideo
Tsukuba-shi, Ibaraki 305 (JP)
• TAJIMA, Masahiro
Shinnanyo-shi, Yamaguchi 746 (JP)
• FUJII, Yashushi
Tsukuba-shi, Ibaraki 305 (JP)
• ASANO, Seiichi
Hikari-shi, Yamaguchi 743 (JP)

(74) Representative: Bühling, Gerhard, Dipl.-Chem. et
al
Patentanwaltsbüro
Tiedtke-Bühling-Kinne & Partner
Bavariaring 4
80336 München (DE)

(56) References cited:
EP-A- 0 308 789        EP-A- 0 412 456
JP-A-50 092 878        JP-A-51 147 469
JP-A-52 007 370        JP-A-53 022 864
JP-A-62 273 039

• PATENT ABSTRACTS OF JAPAN vol. 15, no. 189
(C-831)(4717) 15 May 1991

## Description

Technical field

The present invention relates to a decomposition method of organic halogenated substances. In more detail, it relates to a method of removing halogenated organic compounds containing at least one kind of chlorine, fluorine, bromine, etc. through catalytic decomposition.

Background techniques

Organic halogenated substances such as Fron gas and trichloroethylene are excellent in their chemical properties, in particular, as solvents, jet chemicals, refrigerants, etc. and are most often used in general as well as in industrial world.

These substances however have high volatility commonly and such problems as the destruction of ozonosphere, promotion of global warming and carcinogenicity are pointed out when emitted into the atmosphere as exhaust gases. Hence, recently, the measures are proposed as urgent themes from the aspect of environmental maintenance. In particular, with respect to a part of organic halogenated substances, limitation of their use is decided in the "Protocol on the substances destroying the ozonosphere in Montreal". The measures for the regulation of emission include recovery method, decomposition method, etc. after collected these at the time of emission.

As the collection or decomposition method of organic halogenated substances, there is commonly a method of adsorbing these onto active charcoal or active carbon fibers to recover. This method shows relatively high adsorption effect when the concentration of adsorbing substance is high, but the efficiency becomes poor, when said concentration is low, i.e. the partial pressure is low, since the adsorption level is low and further the adsorption of organic halogenated substance is often obstructed by other coexisting substances. In addition, there is a problem that active charcoal burns, if the heating temperature is too high (over 200 °C) at the time of recovery. Moreover, as the decomposition method, there is a thermal decomposition method. This method includes a method of thermally decomposing at high temperature, e.g. 800 °C and a method of thermally decomposing adsorbed substance on active charcoal at a temperature of up to 800 °C in nitrogen stream. With the latter method, however, if treating, for example, chlorofluorocarbons (CFC-11, CFC-12, etc.) as halogenated substances, carbon tetrachloride is produced, which is not decomposed further at a temperature below 800 °C. Further, while the thermal decomposition method is a relatively inexpensive decomposition method, it imposes secondary problems that halogen freed by decomposition corrodes the material of decomposition device, and the like.

Furthermore, a decomposition method with reductive reagent through chemical reaction has also been investigated and the reagent that is inexpensive and selectively decomposes the decomposing substance is searched diligently. In recent, with respect to the regulated Fron having high potential to destroy the ozonosphere, the development of alternative Fron not causing the destruction of ozonosphere is conducted vigorously. With these alternatives, the problem on the ozonosphere in stratosphere can be solved, but they decompose by themselves in the atmosphere being lower layer, leading to a potential causing new atmospheric pollutions such as acid rain. Hence, it is required to control the emission of organic halogenated substances into the atmosphere, regardless of whether they may be already existing products or alternatives, and the establishment of decomposition techniques of said compounds at the generating sources is of importance.

EP-A-0 412 456 (a document according to Article 54(3) and (4)) discloses a process for the catalytic decomposition of chlorofloro-alkanes by using a catalyst comprising alumina or alumina-silica complexed oxide, wherein the range of Al/(Al+Si) atomic ratio is 1.0-1.5, in the presence of steam at the temperature of 350-1000°C. In this document a catalyst is disclosed being a proton or sodium displaced Y-type zeolite.

EP-A-0 308 789 suggests a two-step method for the catalytical conversion of waste gases containing halogenated organic compounds comprising two different catalysts, the first catalyst may be a zeolite optionally comprising 0.1-20 weight% of an oxide of Ba, Mg, Cu, Ca, Mn and Ni.

JP-A-52 7370 is directed to a catalyst for decomposing waste gases comprising halogenated organic compounds, the catalyst comprising a zeolite substituted by transition metal carrying transition metal compounds.

JP-A-51 147469 discloses a process for cracking bromide of lower aliphatic hydrocarbons using a catalyst containing $Cr_2O_3$.

It is considered that, for the method of decomposing and removing organic halogenated substances particularly from the aspect of environmental maintenance, at least following matters are satisfied. Namely,

1) The decomposition should be surely possible under broad manipulative conditions.
2) The generation of detrimental by-products resulting from the decomposition should be inhibited.
3) The treating substance should be selectively decomposable in the mixture containing treating substance.
4) The correspondence should be possible properly to the emitting form of treating substance, and so forth.

As a result of the investigations on various methods for the purpose of providing a method of decomposing organic halogenated substances adapting to the problems above, the inventors have found a simple and efficient method, leading to the completion of the invention.

Disclosure of the invention

The invention relates to a method of removing organic halogenated substances by contacting gas containing organic halogen compound with acid zeolite, the acid zeolite being an acid zeolite carrying and/or substituted with metal, the carrying and/or substituting metal comprises metals belonging to the third period through the sixth period in the periodic table, with the proviso that Na is excluded, at a decomposition temperature of from 100°C to 800°C.

In following, the invention will be illustrated in detail.

The organic halogenated substances intended for the treatment in the invention are compounds having relatively low molecular weight and having carbon atoms combined with one or more kinds of halogen atoms such as chlorine, fluorine and bromine. Concretely, they include trichlorofluoromethane (CFC-11), dichlorodifluoromethane (CFC-12), 1,1,2-trichloro-1,2,2-trifluoroethane (CFC-113), bromotrifluoromethane, carbon tetrachloride, trichloroethylene, tetrachloroethylene, 1,1,1-trichloroehane and so forth. The molecular diameter of these compounds is about 7.5 Å at maximum.

The feature of the invention is to contact these organic halogenated substances with metal compounds.

Moreover additional organic halogen compounds intended for the treatment in the invention are mainly compounds with molecular diameter of not more than 7.5 Å, though they are not particularly restricted, for example, halogenated methane, halogenated ethane, halogenated propane, halogenated ethylene, halogenated propylene, chloroprene, halogenated cyclobutane, halogenated cyclohexane, halogenated benzene, halogenated toluene, halogenated styrene and so forth, and the method of the invention is particularly suitable for the treatment of organic halogen compounds with carbon atoms of not more than 6 such as methane fluoride, chloromethane, methane bromide, methane iodide, carbon tetrachloride, vinyl chloride, allyl chloride, chloropropane, chloroprene, benzene chloride, etc. And, in the invention, gases such as waste gas containing these are treated.

The metal species of the first metal compounds to be used in the invention belong to the third period through the sixth period in the periodic table excluding the elements belonging to IA and IIA in the same table as well as Na.

These metal compounds are crystalline oxides, noncrystalline oxides, chlorides, sulfates, complexes and so forth of one or more metal species such as Al, Si, V, Fe, Co, Cu, Zn, Zr, Mo, Pd, Pt, Ag and Hg, and one kind or mixtures of these are used. Moreover, usually, these compounds are used by carrying on the carriers used for the carriers of catalysts, for example, later-describing acid zeolite, etc. or also by ion-exchanging with metal ions of metal species constituting these metal compounds. Mixing combination and mixing proportion on using said mixtures are not particularly restricted.

Moreover, the proportion when carrying on (or ion-exchanging) the carrier is 0.1 to 50 wt. % as metal based on the weight of carrier. Furthermore, the carrying (or ion-exchanging) can be performed by general methods. Namely, a method of contacting aqueous solution containing intending ingredient with carrier followed by drying etc. and a method of kneading after mixed both are included.

The zeolite to be used in the invention is that having larger pore diameter than the molecular diameter of organic halogenated substances aforementioned, and, as the zeolites satisfying this condition, for example, faujasite type, mordenite type, L type, omega type, ferrierite type, ZSM-5 type and so forth are all suitable. In the invention, said zeolites can be used in the state as they are, but zeolites in which the ion-exchangeable components of constituents of these zeolites have been ion-exchanged with other cations ion-exchangeable therewith, for example, zeolites ion-exchanged with transition metal ions, alkali metal ions, alkaline earth metal ions, rare-earch metal ions, or protons zeolites carrying other ingredients, for example, said metals, their complexes, chlorides, nitrates, hydroxides, oxides, etc. making then as carriers, and further mixtures of said ingredients with zeolites, and the like are also used.

The ion-exchanging and carrying as described above can be performed by general methods. Namely, a method of contacting aqueous solution containing intending ingredient with zeolite followed by drying etc. and a method of kneading after mixed both are included. The content of these ingredients when allowing to contain into zeolite is 0.1 to 50 wt. %, preferably 0.1 to 20 wt. % based on zeolite.

In the invention, by using said zeolite as acid type, the organic halogen compounds can be decomposed more efficiently.

Here, one method of making acid zeolite is to contact zeolite with aqueous solution containing ammonium ions (aqueous solutions of $NH_4Cl$, $NH_4NO_3$, etc.) to convert to ammonium-ion type zeolite and then to calcine it as a temperature of not lower than 300 °C to convert to H type zeolite by eliminating ammonia. Moreover, other method is to contact with strong acids such as HCl to convert to H type zeolite by directly ion-exchanging with H ions. Since the H type zeolites thus prepared show acidic character, they are called acid zeolites.

In the treatment method of the invention, hydrogen halides such as HCl are generated in the process of the treatment as describing later. Among zeolites, those having such composition that the molar ratio of Si to Al (Si/Al) constituting the zeolite is under 3 are weak against acid and the crystals are easily broken by HCl, HF, etc. to lose the function as catalysts. Hence, it is not preferable to use zeolites with low Si/Al molar ratio in the invention and the use of zeolites with the ratio of not less than 3 is preferable. As one of the methods to increase the Si/Al molar ratio of zeolite, there is a method of heating ammonium-ion type zeolite at a temperature of not lower than 400 °C under the atmosphere of steam, which is a method to be used usually for the de-Al of faujasite type zeolite. Moreover, there is a method of contacting $SiCl_4$ with zeolite under the condition of absence of steam. This is a method of substituting Al with Si and has an advantage that no lattice defects produced by pulling-out of Al atoms generate in zeolite. In addition, there are a method of using chelating agents such as ethylenediamine-tetraacetic acid and a method of using acids such as hydrochloric acid. In the invention, zeolites with inherently high Si/Al molar ratio and those obtainable by all of said methods can be applied.

Such acid zeolites can be used for the invention in the form as they are, but, by using zeolites carrying and/or substituted with one or more kinds of metals, the organic halogen compounds can be treated preferably. The metals to be used here are one or more kinds of metals belonging to the second period through the sixth period in the periodic table, Na being excluded, and, in particular, transition metals such as V, Fe, Co, Ni, Zn, Zr, Mo, Nb, Pd, Pt and Ag are effective. The carrying and substituting methods of metals at this time are not particularly restricted, and, for example, a method of contacting H type zeolite with aqueous solution containing said metals followed by removal of solution, washing and drying, a method of impregnating H type zeolite with said aqueous solution followed by drying, and the like are included. The amount of metal to be used here is 0.1 to 50 wt. %, preferably 0.1 to 20 wt. % based on zeolite. Moreover, when performing the metal substitution through ion-exchange, it is preferable to leave behind the acid in amounts of not less than 50 % to those before ion-exchange from the aspects of activity etc.

The actual use form of metals or metal compounds used in the invention may be powdery, or may be any of moldings molded by usual method, crushed products thereof and the like. Moreover, the size of these on using differs depending on the use scale thereof, but the diameter of granulated products on granulating is preferable to be 0.2 to 10 mm.

In the invention, the method of contacting organic halogenated substance with said metal compounds may be either in gas phase or in liquid phase, but, from the points of properties of treating substance, e.g. high volatility etc., it is preferable to conduct in gas phase. Namely, this is a method of introducing gas containing organic halogenated substance into a bed packed with powdery, granular or pelletal metal compounds or a bed made honeycomb-shaped The contact temperature at this time is room temperature or higher ranging from 100 to 800 °C, preferably from 150 to 600 °C. Moreover, the amount of organic halogenated substance in gas to be introduced into the bed of catalyst is 0.1 ppm to 100 %, preferably 10 to 10000 ppm. The introducing proportion (space velocity, SV) of this gas containing organic halogenated substance into the bed of catalyst is not more than 100,000 $h^{-1}$, preferably not more than 50,000 $h^{-1}$. Furthermore, if the decomposition treatment in the invention is performed in the presence of moisture in reaction system, the moisture reacts with organic halogenated substance to produce carbon dioxide, carbon monoxide and hydrogen halide, which is preferable for the disposal of treated substance in subsequent process. For the amount of water to be used at this time, it is preferable to use an amount of not less than the stoichiometric amount sufficient to produce carbon dioxide, carbon monoxide and hydrogen halide through the reaction of organic halogenated substance with water. Moreover, the components other than the foregoing in the treating gas are not particularly restricted. In the components after the decomposition treatment in the invention, hydrogen halide etc. are sometimes contained, which can be removed by contacting with alkalies such as sodium hydroxide, potassium hydroxide, calcium hydroxide, ammonia and amine.

Moreover, when carbon monoxide is contained, it can be converted easily to carbon dioxide by using oxidation catalyst.

Best embodiment for practicing the invention

In following, the invention will be illustrated in more detail using examples.

Comparative Example 1

H type mordenite type zeolite (made by Tosoh Corp., trade name "HSZ-640 HOA", Si/Al=10) was used as a catalyst. One g thereof was packed in a quartz reaction tube with a diameter of 12 mm and a length of 150 mm, and a gas containing 0.1 vol. % of $CCl_4$ as a halogen-containing organic compound and 1.0 vol. % of steam (other component: air) was introduced into this at a velocity of 500 ml/min as a treating gas, which was reacted at temperatures shown below. Besides, the analysis of treated gas was performed by means of gas chromatography. Results are shown below.

| Treatment temp. (°C) | Decomposition rate (%) |
|---|---|
| 150 | 68 |
| 200 | 97 |

## Example 1

Except that a zeolite containing 3 wt. % of cobalt ions obtained by contacting the zeolite used in Comparative Example 1 with 10 wt. % aqueous solution of cobalt nitrate for 2 hours at 80 °C for cobalt ion-exchange was used as a catalyst, treatment was made similarly to said exmaple. Results are shown below.

| Treatment temp. (°C) | Decomposition rate (%) |
|---|---|
| 150 | 96 |
| 200 | 100 |

## Example 2

Except that a zeolite carrying 1 wt. % of Pd obtained by impregnating the zeolite used in Comparative Example 1 with aqueous solution of tetraminedichloropalladium was used, treatment was made similarly to said example. Results are shown below.

| Treatment temp (°C) | Decomposition rate (%) |
|---|---|
| 150 | 95 |
| 200 | 100 |

## Example 3 - 5

Except that a zeolite containing about 3 wt. % of Cu (Example 3), Ni (Example 4) or Fe (Example 5) obtained by contacting with aqueous solution containing them, respectively, similarly to Example 1 was used, treatment was made similarly to Comparative Example 1. Results are shown below.

| Example | Metal ion | Treatment temp. (°C) | Decomposition rate (%) |
|---|---|---|---|
| 3 | Cu | 150 | 87 |
| | " | 200 | 100 |
| 4 | Ni | 150 | 76 |
| | " | 200 | 99 |
| 5 | Fe | 150 | 81 |
| | " | 200 | 100 |

Referential example

Except that cobalt ion-exchanged zeolite obtained by contacting Na type Y type zeolite (made by Tosoh Corp., trade name "HSZ-310 NAA", Si/Al=2.5) with aqueous solution of cobalt nitrate was used as a catalyst, treatment was made similarly to Comparative Example 1. Results are shown below.

| Treatment temp. (°C) | Decomposition rate (%) |
|---|---|
| 200 | 2 |
| 250 | 11 |
| 300 | 56 |

Example

Using a gas containing $CHCl_3$ as a treating gas and further using zeolite treated similarly to Example 1 so as the zeolite used in said example to contain Co (Example 6), Cu (Example 7), Ni (Example 8) or Fe (Example 9) and untreated zeolite (Comparative Example 2), treatment was made similarly to Comparative Example 1. Results are shown below.

| Example (Comparative) | Metal ion | Treatment temp. (°C) | Decomposition rate (%) |
|---|---|---|---|
| 2 | None | 200 | 53 |
| | " | 250 | 95 |
| 6 | Co | 200 | 74 |
| | " | 250 | 100 |
| 7 | Cu | 200 | 87 |
| | " | 250 | 100 |
| 8 | Ni | 200 | 80 |
| | " | 250 | 100 |
| 9 | Fe | 200 | 77 |
| | " | 250 | 99 |

Example 10 - 14

Except that a gas containing $CH_3Br$ was used as a treating gas and further a zeolite containing 5 wt. % of metal by impregnating the zeolite used in Comparative Example 1 with aqueous solution containing 5 wt. % of Pd (Example 10), Au (Example 11), Cr (Example 12), W (Example 13) or Cu (Example 14), respectively, was used, treatment was made similarly to Comparative example 1. Results are shown below.

| Example | Metal ion | Treatment temp. (°C) | Decomposition rate (%) |
|---------|-----------|----------------------|------------------------|
| 10 | Pd | 300 | 34 |
| | " | 350 | 82 |
| 11 | Au | 300 | 28 |
| | " | 350 | 77 |
| 12 | Cr | 250 | 48 |
| | " | 300 | 98 |
| 13 | W | 300 | 27 |
| | " | 350 | 83 |
| 14 | Cu | 250 | 56 |
| | " | 300 | 99 |

Example 15 - 18 and Comparative Example 3

Using a gas containing $CH_2Cl_2$ as a treating gas and further using zeolite treated similarly to Example 1 so as the zeolite used in said example to contain Co (Example 15), Cu (Example 16), Ni (Example 17) or Fe (Example 18) and untreated zeolite (Comparative Example 3), treatment was made similarly to Comparative Example 1. Results are shown below.

| Example (Comparative) | Metal ion | Treatment temp. (°C) | Decomposition rate (%) |
|-----------------------|-----------|----------------------|------------------------|
| 3 | None | 350 | 43 |
| | " | 400 | 84 |
| 15 | Co | 350 | 56 |
| | " | 400 | 98 |
| 16 | Cu | 350 | 58 |
| | " | 400 | 100 |
| 17 | Ni | 350 | 49 |
| | " | 400 | 91 |
| 18 | Fe | 350 | 51 |
| | " | 400 | 90 |

Example 19 - 21 and Comparative Example 4

Using a gas containing $CH_2ClCH_2Cl$ as a treating gas and using respective zeolite used in Example 6 to 9 and Comparative Example 2 (Co: Example 19, Cu: Example 20, Ni: Example 21, Fe: Example 22, no metal ion-exchange: Comparative Example 4), treatment was made similarly to Comparative Example 1. Results are shown below.

| Example (Comparative) | Metal ion | Treatment temp. (°C) | Decomposition rate (%) |
|---|---|---|---|
| 4 | None | 250 | 41 |
| | " | 300 | 92 |
| 19 | Co | 250 | 73 |
| | " | 300 | 94 |
| 20 | Cu | 250 | 96 |
| | " | 300 | 99 |
| 21 | Ni | 250 | 58 |
| | " | 300 | 90 |
| 22 | Fe | 250 | 91 |
| | " | 300 | 99 |

Example 23

Except that a zeolite containing 3 wt. % of Co ions obtained by contacting H type ZSM-5 type zeolite (made by Tosoh Corp., trade name "HSZ-820 HOA", Si/Al=11) with aqueous solution of cobalt chloride was used, treatment was made similarly to Comparative Example 1. Results are shown below.

| Treatment temp. (°C) | Decomposition rate (%) |
|---|---|
| 150 | 40 |
| 200 | 80 |

Example 24

Except that a zeolite containing 3 wt. of cobalt ions obtained by contacting H type Y type zeolite (made by Tosoh Corp., trade name "HSZ-330 HSA", Si/Al=3) with aqueous solution of cobalt chloride was used, treatment was made similarly to Comparative Example 1. Results are shown below.

| Treatment temp. (°C) | Decomposition rate (%) |
|---|---|
| 150 | 66 |
| 200 | 89 |

Example 25

Except that a zeolite carrying 1 wt. % of Pd obtained by impregnating H type ZSM-5 type zeolite (made by Tosoh Corp., trade name "HSZ-820 HOA", Si/Al=11) with aqueous solution of tetraminedichloropalladium was used, treatment was made similarly to Comparative Example 1. Results are shown below.

| Treatment temp. (°C) | Decomposition rate (%) |
|---|---|
| 150 | 89 |
| 200 | 100 |

Example 26

Except that a zeolite carrying 1 wt. % of Pd obtained by impregnating H type Y type zeolite (made by Tosoh Corp., trade name "HSZ-330 HSA", Si/Al=3) with aqueous solution of tetraminedichloropalladium was used, treatment was made similarly Comparative to Example 1. Results are shown below.

| Treatment temp. (°C) | Decomposition rate (%) |
|---|---|
| 150 | 84 |
| 200 | 100 |

Besides, the decomposition rate was determined from following amounts per unit time.

A: Amount of organic halogenated substance introduced
B: Amount of organic halogenated substance unreacted

$$\text{Decomposition rate} = (A - B)/A \times 100$$

Utilization potential in the industry

The invention provides a simple method and also allows a simple manipulation, thus making it possible to utilize it not only for a large-scale equipment for processing in large quantities, but also for a small-scale equipment for processing in small quantities. Moreover, through the decomposition of organic halogenated substances, less decomposition products difficult for treatment and less detrimental by-products difficult for collection are produced in subsequent process resulting in no generation of secondary environmental pollution by this method.

Moreover, the acid type zeolite to be used in the invention is acid resistant and has high activity making it possible to treat at a lower treatment temperature compared with the conventional method. Moreover, it is possible to easily treat the organic halogen compounds containing no hydrogen.

## Claims

1.  A treatment method of gas containing organic halogen compound, wherein a gas containing organic halogen compound is brought into contact with an acid zeolite, the acid zeolite being an acid zeolite carrying and/or substituted with metal, the carrying and/or substituting metal comprises metals belonging to the third period through the sixth period in the periodic table, with the proviso that Na is excluded, at a decomposition temperature of from 100°C to 800°C.

2.  The treatment method of claim 1, wherein the acid zeolite is a zeolite having Si/Al ratio of not less than 3.

3.  The method of claims 1 or 2, wherein the organic halogenated substance is a compound containing at least one kind of fluorine, chlorine, bromine and iodine.

## Patentansprüche

1.  Verfahren zur Behandlung eines Gases, das eine organische Halogenverbindung enthält, wobei ein Gas, das eine organische Halogenverbindung enthält, bei einer Zersetzungstemperatur im Bereich von 100 °C bis 800 °C mit einem sauren Zeolithen in Kontakt gebracht wird, wobei der saure Zeolith ein saurer Zeolith ist, der ein Metall trägt und/oder mit Metall substituiert ist, wobei das Metall, das getragen wird und/oder mit dem eine Substitution erfolgt, Metalle umfaßt, die im Periodensystem der Elemente zur dritten bis zur sechsten Periode einschließlich gehören, unter der Bedingung, daß Na ausgeschlossen ist.

2. Behandlungsverfahren nach Anspruch 1, wobei der saure Zeolith ein Zeolith mit einem Si/Al-Verhältnis von nicht kleiner als 3 ist.

3. Verfahren nach Anspruch 1 oder Anspruch 2, wobei die organische halogenierte Substanz eine Verbindung ist, die mindestens eine Sorte Fluor, Chlor, Brom und Jod enthält.

**Revendications**

1. Procédé de traitement d'un gaz contenant un composé organique halogéné, dans lequel un gaz contenant un composé organique halogéné est mis en contact avec une zéolite acide, la zéolite acide étant une zéolite acide portant et/ou substituée avec un métal, le métal porté et/ou substituant comprend des métaux appartenant à la troisième période jusqu'à la fin de la sixième période du tableau périodique des éléments, à condition que le Na soit exclu, à une température de décomposition comprise de 100°C à 800°C.

2. Procédé de traitement selon la revendication 1, dans lequel la zéolite acide est une zéolite ayant un rapport Si/Al qui n'est pas inférieur à 3.

3. Procédé selon les revendications 1 ou 2, dans lequel la substance organique halogénée est un composé contenant au moins une espèce parmi le fluor, le chlore, le brome et le iode.